# EUROPÄISCHE PATENTSCHRIFT

(11) **EP 3 426 618 B1**
(45) Veröffentlichungstag und Bekanntmachung des Hinweises auf die Patenterteilung: **09.09.2020**
(21) Anmeldenummer: 17705667.8
(22) Anmeldetag: 22.02.2017
(51) Int. Cl.: C03C 27/12, B32B 17/10, C08J 5/18

(54) **PERFORIERTE, THERMOPLASTISCHE KUNSTSTOFFFOLIEN UND IHRE VERWENDUNG ZUR HERSTELLUNG KEILFÖRMIGER FOLIEN**
PERFORATED THERMOPLASTIC FILMS AND THEIR USE IN THE PREPARATION OF WEDGE-SHAPED FILMS
FEUILLES SYNTHETIQUES THERMOPLASTIQUES PERFOREES ET LEUR UTILISATION POUR FABRIQUER DES FEUILLES CUNEIFORMES

(30) Priorität: 11.03.2016 EP 16159872
(43) Veröffentlichungstag der Anmeldung: 16.01.2019
(73) Patentinhaber: SAINT-GOBAIN GLASS FRANCE, 92400 Courbevoie (FR)
(72) Erfinder: KLUCZEWSKI, Wojciech, 32-300 Olkusz (PL); GIER, Stephan, 66359 Bous (DE); LÜCKE, Stefan, 52477 Alsdorf (DE); PLAHL, Sabrina, 52146 Würselen (DE); VORONKOFF, Justine, 92400 Courbevoie (FR)
(74) Vertreter: Gebauer, Dieter Edmund
(86) Internationale Anmeldenummer: PCT/EP2017/054013
(87) Internationale Veröffentlichungsnummer: WO 2017/153166

(56) Entgegenhaltungen:
- EP-A1- 1 800 855
- EP-A1- 2 017 237
- EP-A1- 2 767 393
- WO-A1-2015/078989
- WO-A1-2015/086233
- WO-A1-2015/134836
- US-A- 5 812 332

## Beschreibung

Die vorliegende Erfindung betrifft perforierte, thermoplastische Kunststofffolien.

Außerdem betrifft die vorliegende Erfindung die Verwendung der perforierten, thermoplastischen Kunststofffolien zur Herstellung von Perforierungen freier, thermoplastischer, keilförmiger Folien.

Des Weiteren betrifft die vorliegende Erfindung ein Verfahren zur Herstellung von Perforierungen freier, thermoplastischer keilförmiger Folien aus den perforierten, thermoplastischen Kunststofffolien.

Verbundglasscheiben (VGS) werden heutzutage an vielen Orten, insbesondere im Fahrzeugbau, verwendet. Dabei umfasst der Begriff Fahrzeug unter anderem Straßenfahrzeuge, Flugzeuge, Schiffe, landwirtschaftliche Maschinen oder auch Arbeitsgeräte.

Auch in anderen Bereichen werden Verbundglasscheiben verwendet. Hierzu zählen beispielsweise Gebäudeverglasungen oder Informationsdisplays, z.B. in Museen oder als Werbedisplays.

Dabei weist eine Verbundglasscheibe im Allgemeinen zwei Glasflächen oder Scheiben auf, die auf eine Zwischenschicht laminiert sind. Die Scheiben selbst können eine Krümmung aufweisen und sind in aller Regel von konstanter Dicke. Die Zwischenschicht weist in aller Regel ein thermoplastisches Material, vorzugsweise Polyvinylbutyral (PVB), einer vorbestimmten Dicke, z.B. 0,76 mm, auf.

Da die Verbundglasscheiben häufig in Bezug auf einen Betrachter geneigt sind, kommt es zu Doppelbildern. Diese Doppelbilder sind dadurch bedingt, dass einfallendes Licht in aller Regel nicht vollständig durch beide Scheiben tritt, sondern dass zumindest ein Teil des Lichtes reflektiert wird und erst danach durch die zweite Scheibe tritt.

Diese Doppelbilder sind insbesondere bei Dunkelheit wahrnehmbar, vor allem bei stark einstrahlenden Lichtquellen, wie z.B. die Scheinwerfer eines entgegenkommenden Fahrzeugs.

Diese Doppelbilder sind extrem störend und ein Sicherheitsproblem.

Häufig werden Verbundglasscheiben auch als Head-Up-Display (HUD) zur Anzeige von Informationen verwendet. Dabei wird mittels einer Projektionsvorrichtung ein Bild auf die Verbundglasscheiben projiziert, um dem Betrachter eine Information in Sichtfeld einzublenden. Im Fahrzeugbereich wird die Projektionseinrichtung z.B. auf dem Armaturenbrett angeordnet, so dass das projizierte Bild auf der nächstliegenden Glasfläche der zum Betrachter hin geneigten Verbundglasscheibe in Richtung des Betrachters reflektiert wird (vgl. z.B. das europäische Patent EP 0 420 228 B1 oder die deutsche Offenlegungsschrift DE 10 2012 211 729 A1).

Hier tritt wiederum ein Teil des Lichts in die Verbundglasscheiben ein und wird nun z.B. an der inneren Grenzschicht der vom Betrachter aus gesehen weiter außen liegenden Glasfläche und der Zwischenschicht reflektiert und tritt anschließend versetzt aus der Verbundglasscheibe aus. Auch hier tritt ein ähnlicher Effekt, der Effekt der Geisterbilder, in Bezug auf das darzustellende Bild auf.

Eine reine klassische Kompensation von Geisterbildern führt dazu, dass eine Überkompensation für Doppelbilder in Transmission zu beobachten ist. Dies führt dazu, dass der jeweilige Betrachter irritiert wird oder im schlimmsten Fall eine Fehlinformation erhält. Bislang wird versucht dieses Problem dadurch zu lösen, dass die Oberflächen der Scheiben nicht mehr parallel, sondern in einem festen Winkel angeordnet werden. Dies wird zum Beispiel dadurch erreicht, dass die Zwischenschicht eine keilförmige Zwischenschicht mit kontinuierlich linear und/oder nichtlinear ansteigender und/oder abnehmender Dicke aufweist. Im Fahrzeugbau wird typischerweise die Dicke so variiert, dass am unteren Ende der Verbundglasscheibe hin zum Motorraum die kleinste Dicke vorgesehen ist, während die Dicke zum Dach hin ansteigt.

Verbundglasscheiben dieser Art mit keilförmiger Zwischenschicht und die optischen Gesetze, auf denen sie beruhen, sind an sich bekannt und werden beispielsweise in den internationalen Patentanmeldungen WO 2015/134836 A1, WO 2015/086234 A1, WO 2015/086233 A1 und WO 2015/078989 A1, den amerikanischen Patenten US 8,451,541 B2, US 7,060,343 B2, US 6,881,472 B2, US 6,636,370 B2, US 5,812,332 A und US 5,013,134, den europäischen Patentschriften EP 2 767 393 A1, EP 2 017 237 A1 und EP 1 800 855 A1 oder den deutschen Offenlegungsschriften DE 10 2007 095 323 A1, DE 196 11 483 A1 und DE 195 35 053 A1 beschrieben.

Der erforderliche Keilwinkelverlauf und das daraus resultierende Dickenprofil der Zwischenschicht muss für jede Scheibenform gesondert berechnet werden. Bislang wird das erfindungsgemäße Dickenprofil durch Verwendung einer entsprechenden Schlitzdüse bei der Extrusion der Folie, oder aber durch gezieltes in Form bringen der mit einem entsprechenden Temperaturprofil aufgeheizten Folie erreicht. Es ist aber auch möglich, durch nachträgliches Abtragen der Folie das gewünschte Dickenprofil zu erzeugen. Diese Methoden können auch kombiniert werden, indem beispielsweise das Dickenprofil in der einen Richtung durch eine entsprechende Schlitzdüse bei der Extrusion und in der anderen Richtung durch nachträgliches entsprechendes in Form bringen der Folie erzeugt wird.

Bei dieser Art der Herstellung treten jedoch Probleme auf.

Wenn die hergestellten Folienbahnen für die Lagerung und den Versand zu Rollen aufgewickelt werden, nehmen die Rollen eine zunehmend konische Form an, was bei der Handhabung und dem Transport der Rollen zu Schwierigkeiten führt. Um diese Schwierigkeiten zu vermeiden, ist es aus dem europäischen Patent EP 0 647 329 B1 bekannt, Folienbahnen herzustellen, die an beiden Rändern auf einer Breite von wenigstens 20 % der Bandbreite ein gleichmäßiges Dickenprofil und ein anschließendes keilförmige Dickenprofil aufweisen, dass sich jeweils bis zur Mitte der Folienbahn erstreckt. Diese nur im Mittelfeld keilförmig ausgebildeten Folienbahnen können dann auf herkömmliche zylindrische Kerne bis zu einer Länge von etwa 300 m aufgewickelt werden. Die Bahnen werden für die Weiterverarbeitung in der Mitte durchgetrennt, auf die gewünschte Form zugeschnitten und so mit den Einzelglasscheiben zusammengelegt, dass der keilförmigen Teil der Bahn im unteren Bereich der Windschutzscheibe liegt, indem das HUD-Sichtfenster angeordnet ist. Bei diesem Verfahren müssen aber die herausragenden Teile der Folien mit gleichmäßigem Dickenprofil entfernt werden und als unbrauchbarer Abfall entsorgt werden. Außerdem bereitet diese Art und Weise der Herstellung große Probleme bei der Herstellung variabler Dickenprofile in zwei lateralen Dimensionen.

Demgegenüber besteht die Aufgabe der vorliegenden Erfindung, ein neues Verfahren zur Herstellung von keilförmigen Kunststofffolien als Zwischenschichten für Verbundglasscheiben zu finden, das präzise, hinsichtlich der Formgebung flexibel und materialsparend ist und keilförmige Kunststofffolien liefert, die auch in horizontal und vertikal gekrümmten Verbundglasscheiben, wie z.B. Panoramascheiben, Doppelbilder und Geisterbilder wirksam unterdrückt.

Diese und weitere Aufgaben werden nach dem Vorschlag der Erfindung durch die Folien und das Verfahren mit den Merkmalen der unabhängigen Patentansprüche gelöst. Vorteilhafte Ausgestaltungen der Erfindung sind durch die Merkmale der Unteransprüche gegeben.

Gegenstand der vorliegenden Erfindung sind demnach perforierte, thermoplastische Kunststofffolien mit vorzugsweise mindestens zwei parallelen Kanten. Wobei zu beachten ist, dass die Kunststofffolien nachdem sie in Form gebracht sind, nicht zwingend parallele Kanten aufweisen. Die perforierten, thermoplastischen Kunststofffolien sind über ihre gesamte Fläche hinweg von gleichmäßiger oder von im Wesentlichen gleicher Dicke.

Hier und im Folgenden bedeutet der Begriff »im Wesentlichen«, dass die betreffende Größe von dem exakten Wert in einem Maße abweicht, das das anwendungstechnische Profil nicht beeinflusst.

Vorzugsweise sind die perforierten, thermoplastischen Kunststofffolien transparent. Als transparent im Sinne der Erfindung wird dann eine Kunststofffolie verstanden, die eine Transmission im sichtbaren Spektralbereich >70 % aufweist. Für Kunststofffolien für den Fahrzeugbereich, die nicht im verkehrsrelevanten Sichtfeld eines Fahrers liegen, beispielsweise für Dachscheiben, kann die Transmission aber auch viel geringer sein, beispielsweise >5 %.

Bevorzugt sind die perforierten, thermoplastischen Kunststofffolien farblos. Insbesondere sind sie klar.

Vorzugsweise werden als thermoplastische Kunststoffe Polyvinylbutyral (PVB), Ethylenvinylacetat (EVA), Polyethylenterephthalat (PET), Polyurethan (PU), Polypropylen (PP), Polyacrylat, Polyethylen (PE), Polycarbonat (PC), Polymethylmethacrylat, Polyvinylchlorid, Polyacetalharz, Gießharze, Polyacrylate, fluorierte Ethylen-Propylen-Copolymerisate, Polyvinylfluorid, Ethylen-Tetrafluorethylen-Copolymerisate sowie Copolymere und Gemische davon verwendet, besonders bevorzugt werden Polyvinylbutyral (PVB), Ethylenvinylacetat (EVA) oder Polyurethan (PU) verwendet. Insbesondere wird PVB verwendet.

Die Dicke der perforierten, thermoplastischen Kunststofffolien kann breit variieren und richtet sich in erster Linie nach dem vorgegebenen Verwendungszweck.

Die perforierten, thermoplastischen Kunststofffolien können durch eine oder auch durch mehrere übereinander angeordnete thermoplastische Folien ausgebildet werden, wobei die Dicke der perforierten, thermoplastischen Kunststofffolien bevorzugt von 0,25 mm bis 2 mm und typischerweise 0,38 mm oder 0,76 mm beträgt.

Die Perforierung der perforierten, thermoplastischen Kunststofffolien wird jeweils von mindestens einem, insbesondere einem Rasterfeld aus einer Vielzahl von Aussparungen (Lochungen) gebildet. Das Rasterfeld erstreckt sich über einen Teil der gesamten Fläche oder über die gesamte Fläche der perforierten, thermoplastischen Kunststofffolien. Dabei sind die Lochungen derart angeordnet, dass in mindestens einer Richtung, vorzugsweise in Richtung der parallelen Kanten, ein Massegradient resultiert.

»Massegradient« bedeutet, dass aufgrund der Perforierung sich die Masse der perforierten, thermoplastischen Kunststofffolien in dieser Richtung ändert. Die Änderung kann linear, stufenförmig oder Form einer konkaven oder konvexen Kurve verlaufen.

Liegt nur ein solcher Massegradient vor, dann haben die perforierten, thermoplastischen Kunststofffolien in Querrichtung, d.h. in der Richtung senkrecht zu den parallelen Kanten, eine gleichmäßige oder im Wesentlichen gleichmäßige Dicke.

In einer vorteilhaften Ausführungsform weisen die perforierten, thermoplastischen Kunststofffolien mindestens einen senkrecht oder in Wesentlichen senkrecht zu dem vorstehend beschriebenen Massegradienten verlaufenden Massegradienten auf. Anders gesagt, verläuft dieser mindestens zweite Massegradient jeweils quer oder im Wesentlichen quer zu den perforierten, thermoplastischen Kunststofffolien. Der mindestens zweite Massegradient bedeutet, dass aufgrund der Perforierung sich die Masse der perforierten, thermoplastischen Kunststofffolien in dieser Richtung ändert. Die Änderung kann ebenfalls linear, stufenförmig oder in Form einer konkaven oder konvexen Kurve verlaufen.

In einer möglichen Ausführungsform der perforierten, thermoplastischen Kunststofffolie verläuft der Massegradient kurvenförmig, wobei die Größe der Aussparungen mindestens ein Kurvenminimum oder Kurvenmaximum zwischen zwei gegenüberliegenden Kanten der Kunststofffolie durchläuft. Bei Herstellung einer Verbundscheibe werden diese Extremwerte des Größenverlaufs vor Lamination der Scheibe so positioniert, dass sie innerhalb des als Head-Up-Display genutzten Bereichs der Scheibe liegen. Dabei können auch mehrere Kurvenminima oder Kurvenmaxima vorliegen, beispielsweise zwei Minima oder zwei Maxima, wobei je ein Minimum oder Maximum im Bereich eines HUD-Feldes liegt. Dies hat den Vorteil, dass im Bereich des Head-Up-Displays ein über die Größe der Aussparungen genau definierbarer Keilwinkel entsteht, der eine sehr exakte Kompensation von Ghostbildern ermöglicht. Besonders eine Kunststofffolie mit mehr als einem Maximum oder Minimum ist mittels des erfindungsgemäßen Verfahrens auf einfache Art und Weise mit genau definierbaren Keilwinkeln herstellbar. Dies ist ein entscheidender Vorteil gegenüber dem Stand der Technik.

Darüber hinaus ist es bei Windschutzscheiben mit jeweils einem (variablen oder konstanten) Keilwinkel in zwei laterale Richtungen möglich, HUD-Felder in Windschutzscheiben näher am sogenannten A-Holm der Karosserie zu platzieren. In der Regel weisen Windschutzscheiben in dieser Scheibenregion eine in Richtung des A-Holm verlaufende Biegung auf. Mittels des erfindungsgemäßen Verfahrens lässt sich sehr einfach eine Keilfolie erzeugen, die eine solche Biegung ausgleichen kann. Im Bereich des HUD-Feldes werden somit unerwünschte Verzerrungen oder Ghostbilder vermieden.

Die Lochungen in einem Rasterfeld können von unterschiedlicher oder von gleicher Größe sein. Dabei können sie von unterschiedlichem oder gleichem Umriss sein.

Der Umriss der Lochungen kann breit variieren und deshalb dem jeweiligen Verwendungszweck hervorragend angepasst werden. Vorzugsweise weisen die Lochungen einen kreisförmigen, einen ovalen oder einen elliptischen Umriss oder einen mindestens dreieckigen Umriss auf.

Beispiele geeigneter mindestens dreieckiger Umrisse sind dreieckige, viereckige, fünfeckige, sechseckige, siebeneckige, achteckige, neuneckige und zehneckige, vorzugsweise dreieckige und viereckige, Umrisse. Diese Umrisse können mindestens eine abgerundete Ecke und/oder Kante haben. Vorzugsweise sind diese Umrisse bzw. die entsprechenden Lochungen in der Richtung parallel oder im Wesentlichen parallel zu den parallelen Kanten der perforierten, thermoplastischen Kunststofffolien gestreckt.

Dreieckige oder trapezförmige Aussparungen (Lochungen) sind bevorzugt, da diese ein weites Spektrum von Keilwinkeln zugänglich machen. Trapezförmige Aussparungen sind besonders bevorzugt, da die spitz zulaufenden Ecken eines Dreiecks schwieriger zuzuschneiden sind als die stumpfen Eckwinkel eines Trapezes. Insbesondere ist mindestens eine der beiden parallelen Kanten des Trapezes abgerundet. Bevorzugt ist die längere der beiden parallelen Kanten des Trapezes abgerundet. Dadurch wird eine weitere Vereinfachung des Verfahrens bewerkstelligt, da einerseits die spitzen Winkel an der Basis des Trapezes wegfallen und somit der Zuschnitt erleichtert wird und andererseits das Schließen der Aussparung beim Laminiervorgang erleichtert wird. Die Wahl von Aussparungen mit einer trapezförmigen Grundform, die an der Basis des Trapezes tropfenförmig auslaufen, hat sich in Versuchen als besonders vorteilhaft erwiesen. Die tropfenförmige Form an der Basis des Trapezes ist vorteilhaft, da der bei Zufließen der Aussparung im Laminationsprozess das Material von beiden Seiten des Tropfens den gleichen Weg zurückzulegen hat. Dadurch ist ein sehr exaktes Zufließen der Lochung möglich.

In einer bevorzugten Ausführungsform sind die Lochungen in Form eines Schachbrettmusters über die perforierte thermoplastische Folie verteilt. Dies ist vorteilhaft, da das Material auf diese Weise gleichmäßig entfernt wird und so das Zufließen der Lochungen erleichtert wird. Außerdem ist zu beobachten, dass die perforierten thermoplastischen Folien selbst über eine höhere mechanische Stabilität verfügen wenn die Aussparungen in Form eines Schachbrettmusters angebracht sind. Diese erhöhte Stabilität ist vorteilhaft bei einem manuellen oder automatisierten Transport der perforierten Folien.

Bevorzugt variiert die Größe der einzelnen Aussparungen im Schachbrettmuster je nach gewünschtem Keilwinkel und Keilwinkelverlauf der späteren Keilfolie. Besonders bevorzugt steigt die Größe der Aussparungen in einer Richtung kontinuierlich oder diskontinuierlich an, wodurch die Richtung des entstehenden Keils der Keilfolie festgelegt wird.

Aufgrund ihrer vorteilhaften anwendungstechnischen Eigenschaften können die erfindungsgemäßen perforierten, thermoplastischen Kunststofffolien zahlreichen Verwendungszwecken zugeführt werden. Insbesondere werden sie aber zur Herstellung von im Verbund von Perforierungen freien, keilförmigen Folien verwendet.

Auch diese von Perforierungen freien, keilförmigen Folien können aufgrund ihrer vorteilhaften anwendungstechnischen Eigenschaften, insbesondere was die Präzision ihrer Keilwinkel betrifft, zahlreichen Verwendungszwecken zugeführt werden. Insbesondere werden sie aber als Zwischenschicht zum haftfesten Verbinden zweier Scheiben zwecks Herstellung einer Verbundscheibe verwendet.

Die Scheiben können je nach ihrer Funktion opak oder transparent sein. Sie können aus Materialien, ausgewählt aus der Gruppe, bestehend aus Holz, Papier, Metall, Kunststoff und Glas sowie Gemischen und Verbunden dieser Materialien, aufgebaut sein. Besonders bevorzugt werden Glas und/oder Kunststoff als transparentes Material verwendet.

Die erste Scheibe und/oder die zweite Scheibe der transparenten Verbundscheibe enthalten bevorzugt Glas, besonders bevorzugt Flachglas, Floatglas, Quarzglas, Borosilikatglas oder Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon.

Die Dicke der transparenten Scheiben kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 5 mm für Fahrzeugglas und bevorzugt von 4 mm bis 25 mm für Möbel, Geräte und Gebäude, insbesondere für elektrische Heizkörper, verwendet. Die Größe der Scheiben kann breit variieren und richtet sich nach der Größe der erfindungsgemäßen Vorrichtung. Die erste Scheibe und gegebenenfalls die zweite Scheibe weisen beispielsweise im Fahrzeugbau und Architekturbereich übliche Flächen von 200 cm² bis zu 20 m² auf.

Die transparente Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die transparenten Scheiben können farblos oder gefärbt sein.

Diese Verbundscheiben, insbesondere die Verbundglasscheiben, können hervorragend als bewegliches funktionales und/oder dekoratives Einzelstück und/oder als Einbauteil in Möbeln, Geräten und Gebäuden sowie in Fortbewegungsmitteln zur Fortbewegung auf dem Lande, in der Luft, oder zu Wasser, insbesondere aber in Kraftfahrzeugen, beispielsweise als bewegliche Heckscheibe und Seitenscheibe und/oder bewegliches Glasdach verwendet werden. Vorzugsweise sind die Verbundglasscheiben als Windschutzscheiben ausgeführt.

Erfindungsgemäß werden die von Perforierungen freien, keilförmigen Folien durch ein Verfahren hergestellt, bei dem man in einem ersten Verfahrensschritt den mindestens einen Massegradienten, der zur Erzeugung einer von Perforierungen freien, keilförmigen Folie mit mindestens einem gewünschten Keilwinkel aus einer perforierten, thermoplastischen Kunststofffolie berechnet. Computerprogramme, mit denen solche Berechnungen routinemäßig durchgeführt werden können, sind bekannt.

In einem zweiten Verfahrensschritt wird das Rasterfeld der perforierten, thermoplastischen Kunststofffolie mit den Lochungen, das für die Erzeugung des gewünschten mindestens einen Massegradienten erforderlich ist, berechnet. Auch hierfür stehen Computerprogramme, mit denen solche Berechnungen routinemäßig durchgeführt werden können, zur Verfügung.

In einem dritten Verfahrensschritt wird das berechnete Rasterfeld mit den Lochungen aus einer thermoplastischen Kunststofffolie mit einer über ihre gesamte Fläche hinweg gleichmäßigen Dicke angebracht. In dieser Weise werden die vorstehend beschriebenen, jeweils gewünschten, perforierten, thermoplastischen Kunststofffolien erhalten. Die Aussparungen (Lochungen) können beispielsweise durch Schneiden oder Ausstanzen oder auch jedes andere dem Fachmann bekannte Verfahren zur Erzeugung von Aussparungen hergestellt werden.

In einem vierten Verfahrensschritte werden die perforierten, thermoplastischen Kunststofffolien auf die jeweils gewünschten Größen zugeschnitten und in einem fünften Verfahrensschritt jeweils zwischen zwei Scheiben platziert. Die beiden Verfahrensschritte drei und vier können auch in umgekehrter Reihenfolge ausgeführt werden.

In einem sechsten Verfahrensschritt werden die zugeschnittenen, perforierten, thermoplastischen Kunststofffolien zwischen jeweils zwei Scheiben heiß verpresst. Dabei werden die Lochungen durch den fließenden Kunststoff geschlossen und es bilden sich die gewünschten, von Perforierungen freien, keilförmigen Folien mit mindestens einem gewünschten Keilwinkel.

Die in dem fünften Verfahrensschritt verwendeten Scheiben können eine antihaftende Oberfläche aufweisen, so dass nach dem sechsten Verfahrensschritt die zugeschnittenen keilförmigen Folien zur weiteren Verwendung entnommen, gelagert und transportiert werden können. In diesem Fall kann das Material der Scheiben beliebig aus der Gruppe, bestehend aus Holz, Papier, Metall, Kunststoff und Glas sowie Gemischen und Verbunden dieser Materialien, ausgewählt werden.

Erfindungsgemäß ist es jedoch bevorzugt, dass die Scheiben keine antihaftenden Oberflächen aufweisen, so dass die von Perforierungen freien, keilförmigen Folien die beiden Scheiben haftfest zu Verbundscheiben, wie sie vorstehend beispielhaft beschrieben werden, verbinden. In diesem Fall enthalten die Scheiben Glas oder Kunststoff. Die keilförmige Folie und die beiden Einzelscheiben sind bevorzugt transparent und weisen besonders bevorzugt eine Transmission von mindestens 70% im sichtbaren Bereich des Spektrums auf. Das Material der Einzelscheiben ist bevorzugt aus der Gruppe, bestehend aus Flachglas, Floatglas, Quarzglas, Borosilikatglas, Kalk-Natron-Glas, Polyethylen, Polypropylen, Polycarbonat, Polymethylmethacrylat, Polystyrol, Polyamid, Polyester, Polyvinylchlorid und/oder Gemischen davon, ausgewählt.

Beschrieben, aber nicht Gegenstand der vorliegenden Erfindung ist darüber hinaus eine Verbundscheibe erhältlich nach dem erfindungsgemäßen Verfahren. Die Verbundscheibe umfasst mindestens zwei Einzelscheiben enthaltend Glas oder Kunststoff sowie mindestens eine keilförmige Folie. Zur Herstellung der Verbundscheibe wird bevorzugt zunächst ein Rasterfeld von Aussparungen (Lochungen) gemäß dem erfindungsgemäßen Verfahren in einer thermoplastischen Kunststofffolie angebracht, so dass eine perforierte, thermoplastische Kunststofffolie entsteht. Die perforierte Kunststofffolie weist dabei erfindungsgemäß in mindestens einer Richtung zwischen zwei gegenüberliegenden Kanten einen Massegradienten auf. Die perforierte thermoplastische Kunststofffolie wird daraufhin auf die gewünschte Größe zugeschnitten und zwischen den Einzelscheiben platziert, wobei die Reihenfolge dieser beiden Schritte beliebig ist. Anschließend wird der Schichtstapel aus thermoplastischer Kunststofffolie und Scheiben zu einer Verbundscheibe laminiert.

Die Verbundscheibe lässt sich für den Fachmann in einfacher Art und Weise von Verbundscheiben nach dem Stand der Technik unterscheiden, da die Perforationen der Kunststofffolie im Produkt schwach sichtbar bleiben, auch nachdem die Folie im Laminationsprozess verschmolzen wurde. Wird eine starke Lichtquelle auf die Kante der Verbundscheibe gerichtet, so sind die Perforationen der Kunststofffolie selbst nach Lamination bei näherer Betrachtung erkennbar. Für den Endverbraucher ist dies nicht störend, da die Kante der Verbundscheibe nach Einbau im Fahrzeug eingefasst ist und von dieser Seite somit kein Licht einstrahlt. Bei Einstrahlung von Licht durch die Scheibe hindurch sind die vormaligen Perforationen nach Lamination nicht mehr erkennbar, wodurch eine Beeinträchtigung des Sichtkomforts vermieden wird.

In einer möglichen Ausführungsform verläuft der Keilwinkel kurvenförmig zwischen den den A-Holmen benachbarten Scheibenkanten. Dabei wird eine perforierte thermoplastische Folie eingesetzt, bei der die Größe der Aussparungen mindestens ein Kurvenminimum oder Kurvenmaximum zwischen zwei gegenüberliegenden Kanten der Kunststofffolie durchläuft, wie bereits für die erfindungsgemäße perforierte Kunststofffolie beschrieben. Bevorzugt entsprechen diese beiden gegenüberliegenden Kanten den zu den A-Holmen der Verbundscheibe benachbarten Scheibenkanten. Zwischen Motorkante und Dachkante verläuft dabei bevorzugt ebenfalls ein Keilwinkel. Dadurch wird ein bidirektionaler Keilwinkel erhalten. Derartige Keilwinkelverläufe sind beispielsweise in WO2015086233 beschrieben und lassen sich unter Verwendung der erfindungsgemäßen thermoplastischen Kunststofffolie einfach und wirtschaftlich herstellen.

Die Verbundscheibe weist bevorzugt eine Zwischenschicht mit einem Keilwinkel von 0,1 mrad bis 1 mrad, besonders bevorzugt 0,3 mrad bis 1 mrad, insbesondere 0,75 mrad bis 1 mrad, beispielsweise 0,75 mrad bis 0,8 mrad auf. Das erfindungsgemäße Herstellungsverfahren macht demnach auch derartig große Keilwinkel von über 0,75 mrad zugänglich, während bekannte kommerziell erhältliche Keilfolien maximale Keilwinkel von 0,70 bis 0,73 mrad aufweisen.

In einer bevorzugten Ausführungsform der Verbundscheibe handelt es sich um die Windschutzscheibe eines Kraftfahrzeugs. Alternativ handelt es sich um die Seitenscheibe eines Kraftfahrzeugs. Sofern die Scheibe eine Seitenscheibe betrifft, handelt es sich bei der im Folgenden als Motorkante bezeichneten Kante der Scheibe um die im Einbauzustand an der Türkante liegenden Seite der Scheibe. Die Dachkante der Scheibe entspricht hingegen bei einer Seitenscheibe der dem A-Holm des Fahrzeugs benachbarten Kante der Verbundscheibe. Der Begriff A-Holm ist dem Fachmann wohlbekannt und bezeichnet im Fahrzeugbereich die feststehende zwischen Windschutzscheibe und Seitenscheibe befindliche Karosseriesäule.

Bevorzugt haben die Lochungen eine Breite von maximal 10 mm, bevorzugt maximal 6 mm, beispielsweise 5,2 mm oder kleiner. Die Breite der Lochungen ist dabei als die maximale Abmessung einer einzelnen Aussparung, gemessen in Richtung einer in der Mitte der Motorkante an diese angelegte Tangente, definiert.

Eine bevorzugte Ausführungsform der Verbundscheibe wird hergestellt, indem die perforierte Kunststofffolie so zwischen den Scheiben eingelegt wird, dass der mindestens eine Massegradient der perforierten thermoplastischen Kunststofffolie zwischen Dachkante und Motorkante der Verbundscheibe, bezogen auf den Einbauzustand in einem Kraftfahrzeug, verläuft. Der Massenanteil der Kunststofffolie in Nachbarschaft zur Motorkante der Scheibe ist dabei bevorzugt geringer als der benachbart zur Dachkante befindliche Anteil der Kunststofffolie. Als Motorkante wird in diesem Sinne die, nach Montage in einer Fahrzeugkarosserie, dem Motorraum zugewandte Kante der Verbundscheibe bezeichnet, während die gegenüberliegende Dachkante an den Dachhimmel des Fahrzeugs grenzt.

Bevorzugt ist das Rasterfeld mit Lochungen nur im unteren, der Motorkante benachbarten, Bereich der Verbundscheibe angebracht und erstreckt sich von der Motorkante aus bis zu einer Scheibenhöhe von maximal 75% der Gesamtscheibenhöhe, besonders bevorzugt bis zu einer Scheibenhöhe von maximal 50% der Gesamtscheibenhöhe, insbesondere 40% der Gesamtscheibenhöhe.

In einer besonders bevorzugten Ausführungsform wird die Verbundscheibe unter Verwendung einer thermoplastischen perforierten Kunststofffolie mit Aussparungen von trapezförmiger Grundform hergestellt. Die beiden zueinander parallelen Seiten der Trapeze sind vor Lamination der Verbundscheibe im Wesentlichen parallel zur Dachkante bzw. Motorkante der späteren Verbundscheibe ausgerichtet. Bevorzugt ist der Abstand der längeren der beiden parallelen Seiten des Trapezes zur Motorkante geringer als der Abstand der kürzeren der beiden parallelen Seiten des Trapezes zur Motorkante. Die längere der parallelen Seiten des Trapezes ist somit in Richtung der Motorkante orientiert. Eine oder mehrere Kanten der trapezförmigen Grundform sind bevorzugt abgerundet. In einer besonders bevorzugten Ausführungsform verfügt die längere der beiden parallelen Seiten des Trapezes über eine tropfenförmige Ausbuchtung. Diese trapezförmigen Aussparungen mit tropfenförmiger Ausbuchtung an der Basis des Trapezes sind in Form eines Schachbrettmusters über die perforierte thermoplastische Folie verteilt. Die Fläche der einzelnen Aussparungen steigt dabei bevorzugt von der Dachkante der späteren Verbundscheibe zur Motorkante der Verbundscheibe an, so dass benachbart zur Motorkante mehr Material entfernt wird als in Nachbarschaft zur Dachkante. Wie bereits erwähnt ist dies vorteilhaft im Hinblick auf ein exaktes Ausschneiden der Aussparungen, ein gutes Zufließen der Aussparungen und eine kontinuierliche keilförmige Materialverteilung im Laminationsprozess.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

### Kurze Beschreibung der Figuren

Die Erfindung wird nun anhand von Ausführungsbeispielen näher erläutert, wobei Bezug auf die beigefügten Figuren genommen wird. Es zeigen in vereinfachter nicht maßstäblicher Darstellung:
- Figur 1: eine Draufsicht auf eine erste Ausführungsform einer perforierten, thermoplastischen Kunststofffolie 1;
- Figur 2: eine Draufsicht auf eine zweite Ausführungsform einer perforierten, thermoplastischen Kunststofffolie 1;
- Figur 3: eine Draufsicht auf eine dritte Ausführungsform einer perforierten, thermoplastischen Kunststofffolie 1;
- Figur 4: eine Draufsicht auf eine vierte Ausführungsform einer perforierten, thermoplastischen Kunststofffolie 1;
- Figur 5: eine Draufsicht auf eine fünfte Ausführungsform einer perforierten thermoplastischen Kunststofffolie 1;
- Figur 6: einen Querschnitt durch eine Verbundscheibe 7 mit keilförmiger Folie;
- Figur 7: Einzelscheiben 7.1, 7.2 und perforierte thermoplastische Kunststofffolie 1 der Verbundscheibe 7 als Windschutzscheibe vor Lamination.

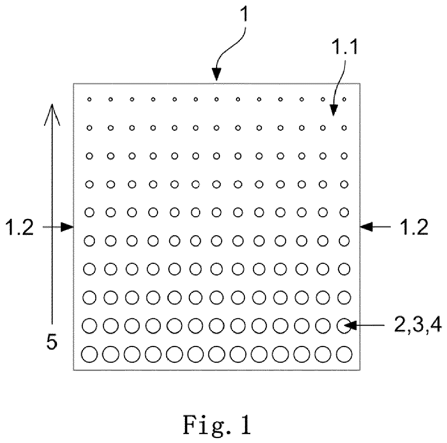

In den Figuren 1 bis 7 haben die Bezugszeichen die folgende Bedeutung:
- 1: perforierte, thermoplastische Kunststofffolie
- 1.1: Oberfläche der perforierten, thermoplastischen Kunststofffolie 1
- 1.2: parallele Seitenkanten der perforierten, thermoplastischen Kunststofffolie 1
- 2: Perforierung
- 3: Rasterfeld
- 4: Aussparung, Lochung
- 5: Massegradient
- 5.1, 5.2: Massegradient senkrecht zum Massegradienten 5
- 6: von Perforierungen freie, keilförmige Folie
- 7: Verbundscheibe
- 7.1, 7.2: Einzelscheiben der Verbundscheibe 7
- 8: Keilwinkel
- 9: erster Bereich
- 10: zweiter Bereich
- 11: dritter Bereich

### Ausführliche Beschreibung der Figuren

### Figuren 1 bis 5

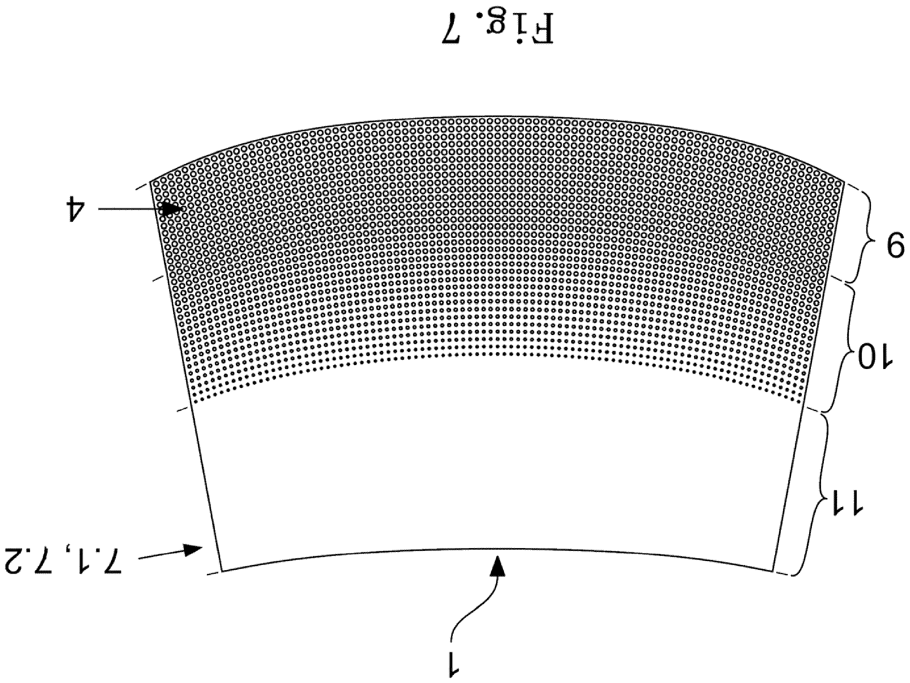

Die **Figuren 1 bis 5** zeigen Draufsichten auf fünf Ausführungsformen von perforierten, thermoplastischen Polyvinylbutyral-Folien 1. Die Polyvinylbutyral-Folien 1 wiesen eine Abmessung von 300 mm mal 300 mm und eine gleichmäßige Dicke von 0,7 mm auf. Ihre Oberfläche 1.1 war gleichmäßig glatt. Sie hatten zwei parallele Kanten 1.2. Bei den in Figuren 1 bis 5 gezeigten Ausführungsformen des Rasterfeldes handelt es sich um quadratische Muster der oben genannten quadratischen Abmessung. Dabei wurde die gute Ausführbarkeit der gezeigten Lochmuster bewiesen. Danach wurde das Muster auf Windschutzscheiben und Seitenscheiben übertragen, wobei in diesem Fall nur ein Teil der Scheibe ein Rasterfeld aufweist und in einem anderen Teil keine Aussparungen angebracht sind. Figur 7 zeigt eine solche Windschutzscheibe mit Rasterfeld.

Die Figur 1 wies als Perforierung 2 ein Rasterfeld 3 mit runden Lochungen 4 auf. Der längs der parallelen Kanten 1.2 verlaufende Massegradient wurde dadurch eingestellt, dass die lichten Weiten der runden Lochungen 4 in jeweils einer Spalte des Rasterfeldes 3 immer kleiner wurden.

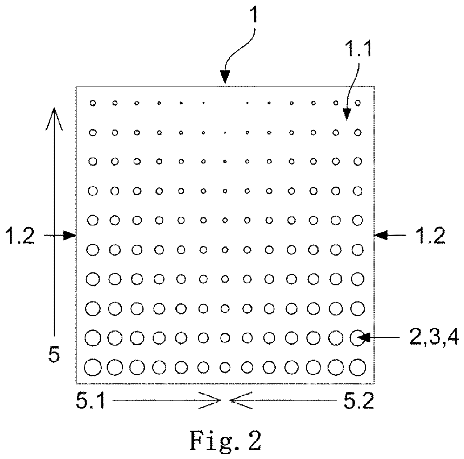

Die Perforierung 2 der **Figur** 2 entsprach im Wesentlichen der Figur 1 mit dem Unterschied, dass außer dem Massegradienten 5 noch zwei senkrecht hierzu angeordnete Massegradienten 5.1 an 5.2 vorhanden waren. Diese wurden eingestellt, indem in jeder Zeile des Rasterfeldes 3 die lichten Weiten der Lochungen 4 zunächst immer kleiner wurden, um dann zur Kante 1.2 hin wieder zu anzusteigen.

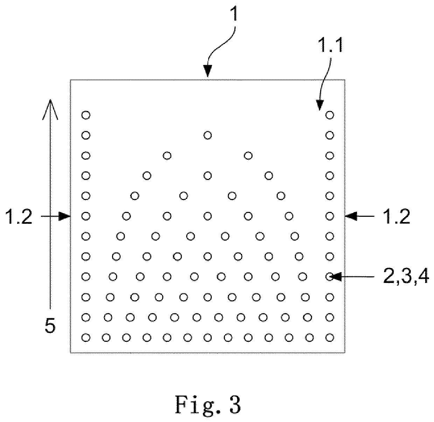

Die Perforierung 2 der **Figur 3** wies ein komplexes Rasterfeld 3 mit gleichgroßen runden Lochungen 4 auf, die indes nicht in einem regelmäßigen Raster angeordnet waren. So waren die Lochungen 4 längs einer Kante 1.2 in einer geraden Linie angeordnet, wogegen die Mehrzahl der Lochungen 4 in nach oben abnehmender Anzahl, äquidistant in horizontaler Richtung angeordnet waren. Der Massegradient 5 wurde durch eine verhältnismäßig große Fläche ohne Lochungen 4 eingestellt.

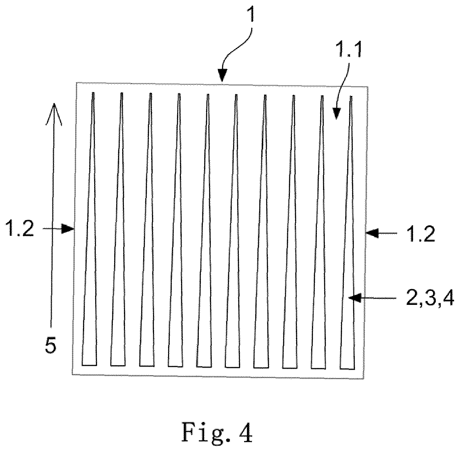

Die **Figur 4** wies eine Perforierung 2 mit einem Rasterfeld 3 auf, das aus lang gestreckten, gleich ausgerichteten, parallel zu den Seitenkanten 1.2 angeordneten Dreiecken 4 bestand. Der Massegradient 5 ergab sich aus dieser Anordnung.

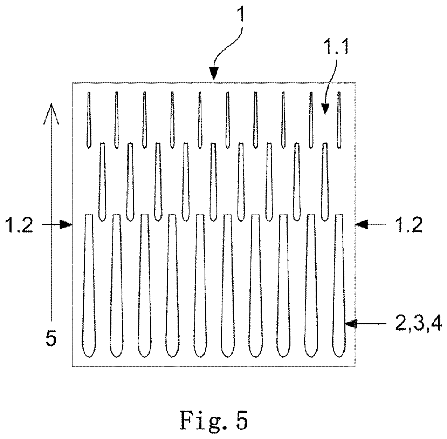

Die **Figur 5** wies eine Perforierung 2 mit einem Rasterfeld 3 auf, das von lang gestreckten, gleich ausgerichteten, parallel zu den Seitenkanten 1.2 angeordneten, "krawattenförmigen" Lochungen 4 gebildet wurde. Die Lochungen 4 konnten auch als lang gestreckte Trapeze, bei denen die längere der beiden parallelen Kanten abgerundet war, aufgefasst werden. Die Lochungen 4 waren auf kurzen Strecken ineinander geschachtelt. Der Massegradient 5 resultierte daraus, dass die lichte Weite der Lochungen 4 in den Spalten des Rasterfeldes 3 kleiner wurde, wogegen sie in den Zeilen gleich blieb. Figur 5 ist ein Beispiel dafür, dass die Reihen von Lochungen (2,3,4) zueinander versetzt sind.

### Figur 6

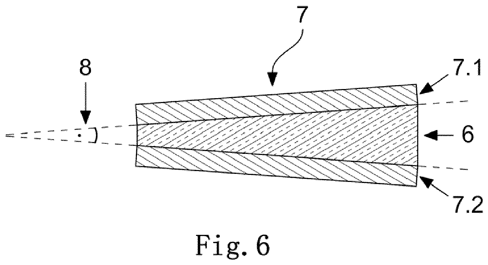

Die **Figur 6** zeigt einen Querschnitt durch eine Verbundglasscheibe 7. Die Einzelscheiben 7.1 und 7.2 aus Floatglas wiesen eine Fläche von 1 m² auf und waren 1,4 mm dick. Sie waren durch eine von Perforierungen freie, keilförmige Polyvinylbutyral-Folie 6 haftfest verbunden. Der Keilwinkel 8 war 0,75 mrad.

Die von Perforierungen freie, keilförmige Polyvinylbutyral-Folie 6 wurde jeweils durch Heißpressen der entsprechend berechneten und hergestellten perforierten, thermoplastischen Polyvinylbutyral-Folien gemäß den Figuren 1 bis 5 hergestellt.

Es erwies sich als ein ganz besonderer Vorteil, dass durch dieses Verfahren der Keilwinkel besonders präzise eingestellt werden konnte.

### Figur 7

Figur 7 zeigt eine Draufsicht der Verbundscheibe 7 aus Figur 6 vor Lamination. Die Verbundscheibe 7 entspricht nach Lamination einer Windschutzscheibe. Zwischen den beiden Einzelscheiben 7.1, 7.2 der Verbundscheibe ist eine perforierte thermoplastische Kunststofffolie 1 eingelegt. Die in der perforierten Folie 1 gezeigten Lochungen 4 sind nicht maßstabsgetreu. Es soll lediglich eine beispielhafte Verteilung und ein Größenverlauf der Lochungen gezeigt werden. Das Verhältnis des mittels Lochungen entfernten Folienmaterials zu dem noch vorhandenen Folienmaterial ist ebenfalls nicht maßstabsgetreu. Die perforierte Folie 1 verfügt dabei über drei verschiedene Bereiche, in denen sich der Anteil des durch Lochungen 4 entfernten Materials unterscheidet. Der zweite Bereich liegt dabei zwischen dem ersten Bereich und dem dritten Bereich. Im ersten Bereich 9, der benachbart zur Motorkante der Verbundscheibe 7 liegt, sind Lochungen 4 in Form eines gleichmäßigen Rasters angebracht, wobei die Fläche der Lochungen innerhalb des ersten Bereichs 9 konstant ist. Die Lochungen 4 sind in Form von Reihen angebracht, die beispielsweise parallel zur Motorkante verlaufen können. Der zweite Bereich 10 grenzt unmittelbar an den ersten Bereich 9 an und verfügt ebenfalls über in Reihen angeordnete Lochungen 4. Eine von der Motorkante aus betrachtet erste Reihe von Lochungen 4 innerhalb des zweiten Bereichs 10 grenzt dabei an den ersten Bereich 9. Die Lochungen dieser ersten Reihe des zweiten Bereichs 10 entsprechen in ihrer Größe der Größe der Lochungen 4 im ersten Bereich. Im weiteren Verlauf nimmt die Größe der Lochungen 4 im zweiten Bereich 10 in Richtung der Dachkante der Verbundscheibe 7 ab, bevorzugt kontinuierlich ab. Im dritten Bereich 11 befinden sich keine Lochungen. Der Größenverlauf der Lochungen gemäß Figur 7 ist besonders vorteilhaft, da auf diese Weise nach Lamination der Anordnung auf einfache Weise eine Verbundscheibe mit Keilfolie erzeugt werden kann. Zur Erzeugung des Keils ist es notwendig im unteren, der Motorkante benachbarten, ersten Bereich einen größeren Anteil des Materials zu entfernen. Im oberen, der Dachkante benachbarten, dritten Bereich sind keine Lochungen erforderlich, da dieser Bereich üblicherweise nicht als HUD-Feld genutzt wird und somit hier kein Keilverlauf der Folie notwendig ist. Der zwischen erstem und drittem Bereich liegende zweite Bereich dient als Übergangsbereich zwischen diesen, in dem die Folie nach Lamination einen Keilverlauf, bevorzugt einen kontinuierlichen Keilverlauf zwischen erstem und drittem Bereich zeigt. Ein HUD-Feld wird bevorzugt innerhalb dieses zweiten Bereichs positioniert, da der dort vorliegende Keilverlauf besonders geeignet ist zur Kompensation von Ghostbildern. Die in Figur 7 gezeigten Lochungen 4 sind beispielhaft in Form von kreisförmigen Aussparungen dargestellt. Diese können jedoch ebenso jede beliebige im Rahmen dieser Erfindung offenbarte Form annehmen. Bevorzugt weisen die Lochungen die bereits beschriebene trapenzförmige Grundform auf, wobei die längere der beiden parallelen Kanten des Trapezes abgerundet ist. Des Weiteren kann zusätzlich zu dem in Figur 7 beschriebenen ersten Massegradienten ein weiterer zweiter Massegradient zwischen den Seitenkanten der Verbundscheibe im Wesentlichen senkrecht zum ersten Massegradienten verlaufen.

## Patentansprüche

1. Perforierte, thermoplastische Kunststofffolien (1) von über ihre gesamte Fläche (1.1) hinweg gleichmäßiger Dicke, geeignet zur Verwendung als Zwischenschicht einer Verbundscheibe, worin die Perforierung (2) von mindestens einem Rasterfeld (3) aus einer Vielzahl von Lochungen (4) gebildet ist, das sich über einen Teil der gesamten Fläche (1.1) oder über die gesamte Fläche (1.1) hinweg erstreckt, wobei die Lochungen (4) derart angeordnet sind, dass in mindestens einer Richtung in den Kunststofffolien (1) ein Massegradient (5) resultiert, wobei Massegradient bedeutet, dass sich aufgrund der Perforierung (2) die Masse der perforierten, thermoplastischen Kunststofffolien (1) in dieser Richtung ändert.

2. Kunststofffolien (1) nach Anspruch 1, **dadurch gekennzeichnet, dass** sie mindestens einen senkrecht zu dem Massegradienten (5) verlaufenden Massegradienten (5.1, 5.2, .... 5.n) mit n = eine ganze Zahl >2 aufweisen.

3. Kunststofffolien (1) nach Anspruch 1 oder 2, **dadurch gekennzeichnet, dass** die Lochungen (4) in einem Rasterfeld (3) von unterschiedlicher oder von gleicher Größe sind.

4. Kunststofffolien (1) nach einem der Ansprüche 1 bis 3, **dadurch gekennzeichnet, dass** die Lochungen (4) in einem Rasterfeld (3) von unterschiedlichem oder gleichem Umriss sind und die Reihen von Lochungen (4) zueinander versetzt sind.

5. Kunststofffolien (1) nach Anspruch 4, **dadurch gekennzeichnet, dass** die Lochungen (4) mindestens einen kreisförmigen, einen ovalen, einen elliptischen Umriss oder eine Kombination davon oder einen mindestens dreieckigen Umriss aufweisen.

6. Kunststofffolien (1) nach Anspruch 5, **dadurch gekennzeichnet, dass** die mindestens dreieckigen Lochungen (4) mindestens eine abgerundete Ecke und/oder Kante haben.

7. Kunststofffolien (1) nach einem der Ansprüche 1 bis 6, **dadurch gekennzeichnet, dass** die Lochungen (4) in Form eines Schachbrettmusters angeordnet sind.

8. Verwendung der perforierten, thermoplastischen Kunststofffolien gemäß einem der Ansprüche 1 bis 7 zur Herstellung von von Perforierungen freien, keilförmigen Folien (6).

9. Verwendung nach Anspruch 8, wobei die von Perforierungen freien, keilförmigen Folien (6) als Zwischenschicht zum haftfesten Verbinden zweier Scheiben (7.1) und (7.2) zwecks Herstellung einer Verbundscheibe (7) dienen.

10. Verfahren zur Herstellung von von Perforierungen freien, keilförmigen Folien (6), umfassend die Verfahrensschritte
(A) Berechnung des mindestens einen Massegradienten (5, 5.1, 5.2 .... 5n), worin n die vorstehend angegebene Bedeutung hat, der zur Erzeugung einer von Perforierungen freien, keilförmigen Folie (6) mit mindestens einem gewünschten Keilwinkel (8) aus einer perforierten, thermoplastischen Kunststofffolie (1) gemäß einem der Ansprüche 1 bis 9 erforderlich ist,
(B) Berechnung des Rasterfeldes (3) mit Lochungen (4) der perforierten, thermoplastischen Kunststofffolie (1), das für die Erzeugung des gewünschten mindestens einen Massegradienten (5, 5.1, 5.2 .... 5n), worin n die vorstehend angegebene Bedeutung hat, erforderlich ist, und
(C) Anbringen des berechneten Rasterfeldes (3) mit den Lochungen (4) aus einer thermoplastischen Kunststofffolie mit einer über die gesamte Fläche hinweg gleichmäßigen Dicke und Erhalt der gewünschten perforierten, thermoplastischen Kunststofffolie (1) gemäß einem der Ansprüche 1 bis 9
sowie
(D) Zuschneiden der perforierten, thermoplastischen Kunststofffolie (1) auf die gewünschte Größe,
(E) Platzieren der zugeschnittenen, perforierten, thermoplastischen Kunststofffolie (1) zwischen zwei Einzelscheiben (7.1) und (7.2) und
(F) Heißverpressen der zugeschnittenen, perforierten, thermoplastischen Kunststofffolie (1) zwischen den beiden Scheiben (7.1) und (7.2) unter Bildung einer von Perforierungen freien, keilförmigen Folie (6) mit mindestens einem gewünschten Keilwinkel (8).

11. Verfahren nach Anspruch 10, **dadurch gekennzeichnet, dass** die im Verfahrensschritt (E) verwendeten Einzelscheiben (7.1) und (7.2) eine antihaftende Oberfläche aufweisen und dass nach dem Verfahrensschritt (F) die zugeschnittenen, keilförmigen Folien (6) zur weiteren Verwendung entnommen und gelagert werden.

12. Verfahren nach Anspruch 10, **dadurch gekennzeichnet, dass** die in den Verfahrensschritten (D) und (F) verwendeten Einzelscheiben (7.1) und (7.2) keine antihaftenden Oberflächen aufweisen, so dass die keilförmige Folie (6) die beiden Scheiben (7.1) und (7.2) als Zwischenschicht (6) unter Bildung einer Verbundscheibe (7) haftfest verbindet und die Scheiben (7.1, 7.2) Glas oder Kunststoff umfassen.

13. Verfahren nach Anspruch einem der Ansprüche 10 bis 12, **dadurch gekennzeichnet, dass** das Material der perforierten, thermoplastischen Kunststofffolien (1) aus der Gruppe, bestehend aus Polyvinylbutyral (PVB), Ethylenvinylacetat (EVA), Polyurethan (PU), und/oder Copolymerisaten und Gemischen hiervon, ausgewählt wird.

## Claims

1. Perforated, thermoplastic films (1) having uniform thickness over their entire area (1.1), suitable for use as an intermediate layer of a composite pane, wherein the perforation (2) is formed by at least one grid zone (3) of a plurality of holes (4), which grid zone extends over part of the entire area (1.1) or over the entire area (1.1), wherein the holes (4) are arranged such that a mass gradient (5) results, in at least one direction in the plastic films (1), wherein mass gradient means that because of the perforation, the mass of the perforated, thermoplastic films (1) changes in this direction.

2. Plastic films (1) according to claim 1, **characterized in that** they have at least one mass gradient (5.1, 5.2, .... 5.n), where n = an integer >2, running perpendicular to the mass gradient (5).

3. Plastic films (1) according to claim 1 or 2, **characterized in that** the holes (4) in a grid zone (3) have the same size or different sizes.

4. Plastic films (1) according to one of claims 1 through 3, **characterized in that** the holes (4) in a grid zone (3) have the same outline or different outlines and the ranks of holes (4) are offset relative to one another.

5. Plastic films (1) according to claim 4, **characterized in that** the holes (4) have at least a circular, an oval, an elliptical outline, or a combination thereof or an at least triangular outline.

6. Plastic films (1) according to claim 5, **characterized in that** the at least triangular holes (4) have at least one rounded corner and/or edge.

7. Plastic films (1) according to one of claims 1 through 6, **characterized in that** the holes (4) are arranged in a checkerboard pattern.

8. Use of the perforated, thermoplastic films according to one of claims 1 through 7 for producing wedge-shaped films (6) free of perforations.

9. Use according to claim 8, wherein the wedge-shaped films (6) free of perforations, serve as an intermediate layer for the adhesive joining of two panes (7.1) and (7.2) for producing a composite pane (7).

10. Method for producing wedge-shaped films (6) free of perforations, comprising the process steps
(A) Calculating the at least one mass gradient (5, 5.1, 5.2 .... 5n), where n has the meaning indicated above, that is necessary for producing a wedge-shaped film (6) free of perforations with at least one desired wedge angle (8) from a perforated, thermoplastic film (1) according to one of claims 1 through 9,
(B) Calculating the grid zone (3) with holes (4) of the perforated, thermoplastic film (1) that is necessary for producing the desired at least one one mass gradient (5, 5.1, 5.2 .... 5n), where n has the meaning indicated above, and
(C) Making the calculated grid zone (3) with the holes (4) from a thermoplastic film having a uniform thickness over the entire area and obtaining the desired perforated, thermoplastic film (1) according to one of claims 1 through 9
as well as
(D) Cutting the perforated, thermoplastic film (1) to the desired size,
(E) Placing the cut-to-size, perforated, thermoplastic film (1) between two individual panes (7.1) and (7.2), and
(F) Hot pressing the cut-to-size, perforated, thermoplastic film (1) between the two panes (7.1) and (7.2), forming a wedge-shaped film (6) free of perforations with at least one desired wedge angle (8).

11. Method according to claim 10, **characterized in that** the individual panes (7.1) and (7.2) used in process step (E) have an anti-adhesive surface and **in that** after the process step (F) the cut-to-size, wedge-shaped films (6) are removed and stored for further use.

12. Method according to claim 10, **characterized in that** the individual panes (7.1) and (7.2) used in process steps (D) and (F) have no anti-adhesive surfaces such that the wedge-shaped film (6) adhesively joins the two panes (7.1) and (7.2) as an intermediate layer (6), forming a composite pane (7), and the panes (7.1, 7.2) include glass or plastic.

13. Method according to one of claims 10 through 12, **characterized in that** the material of the perforated, thermoplastic films (1) is selected from the group consisting of polyvinyl butyral (PVB), ethylene vinyl acetate (EVA), polyurethane (PU), and/or copolymers and mixtures thereof.

## Revendications

1. Films thermoplastiques perforées (1) ayant une épaisseur uniforme sur toute leur surface (1.1), appropriées pour être utilisées comme couche intermédiaire d'un vitrage composite, dans lesquelles la perforation (2) est formée par au moins une zone de grille (3) d'une pluralité de trous (4), laquelle zone de grille s'étend sur une partie de la surface entière (1.1) ou sur toute la surface (1.1), les trous (4) étant disposés de telle sorte qu'il en résulte un gradient de masse (5) dans au moins une direction dans les feuilles de matière plastique (1), le gradient de masse signifiant qu'en raison de la perforation, la masse des feuilles thermoplastiques perforées (1) change dans cette direction.

2. Films plastiques (1) selon la revendication 1, **caractérisés en ce qu'**ils présentent au moins un gradient de masse (5.1, 5.2, .... 5.n), avec n = un nombre entier >2, s'étendant perpendiculairement au gradient de masse (5).

3. Films plastiques (1) selon la revendication 1 ou 2, **caractérisés en ce que** les trous (4) dans une zone de grille (3) ont la même taille ou des tailles différentes.

4. Films plastiques (1) selon l'une des revendications 1 à 3, **caractérisés en ce que** les trous (4) dans une zone de grille (3) ont le même contour ou des contours différents et les rangs des trous (4) sont décalés les uns par rapport aux autres.

5. Films plastiques (1) selon la revendication 4, **caractérisés en ce que** les trous (4) ont au moins un contour circulaire, ovale, elliptique ou une combinaison de ceux-ci ou un contour au moins triangulaire.

6. Films plastiques (1) selon la revendication 5, **caractérisés en ce que** les trous (4) au moins triangulaires ont au moins un coin et/ou un bord arrondi.

7. Films plastiques (1) selon l'une des revendications 1 à 6, **caractérisés en ce que** les trous (4) sont disposés en damier.

8. Utilisation des films thermoplastiques perforés selon l'une des revendications 1 à 7 pour la fabrication de films cunéiformes (6) exempts de perforations.

9. Utilisation selon la revendication 8, dans laquelle les films cunéiformes (6) exempts de perforations servent de couche intermédiaire pour le collage de deux vitres (7.1) et (7.2) pour la fabrication d'une vitre composite (7).

10. Procédé de fabrication de films cunéiformes (6) exemptes de perforations, comprenant les étapes de procédé
(A) Calculer 'au moins un gradient de masse (5, 5.1, 5.2 .... 5n), où n a la signification indiquée ci-dessus, qui est nécessaire pour la fabrication d'un film cunéiforme (6) exempt de perforations avec au moins un angle de coin (8) souhaité à partir d'un film thermoplastique (1) perforé selon l'une des revendications 1 à 9,
(B) Calculer la zone de grille (3) à trous (4) du film thermoplastique perforée (1) nécessaire pour produire au moins un gradient de masse (5, 5.1, 5.2 .... 5n), où n a la signification indiquée ci-dessus, et
(C) former la zone de grille calculée (3) avec les trous (4) à partir d'un film thermoplastique ayant une épaisseur uniforme sur toute la surface et obtenir le film thermoplastique perforé souhaité (1) selon l'une des revendications 1 à 9
ainsi que
(D) découper le film thermoplastique perforé (1) à la taille souhaitée,
(E) placer le film thermoplastique perforé et découpé (1) entre deux vitres individuelles (7.1) et (7.2), et
(F) presser à chaud le film thermoplastique (1) perforé et découpé à la taille voulue entre les deux vitres (7.1) et (7.2), en formant un film cunéiforme (6) exempt de perforations avec au moins un angle de cale (8) souhaité.

11. Procédé selon la revendication 10, **caractérisé en ce que** les différentes vitres (7.1) et (7.2) utilisées dans l'étape de procédé (E) présentent une surface antiadhésive et **en ce qu'**après l'étape de procédé (F), les films cunéiformes (6) découpés à la taille voulue sont retirés et stockés pour une utilisation ultérieure.

12. Procédé selon la revendication 10, **caractérisé en ce que** les vitres individuelles (7.1) et (7.2) utilisées dans les étapes de procédé (D) et (F) ne présentent pas de surfaces antiadhésives de telle sorte que le film cunéiforme (6) relie de manière adhésive les deux vitres (7.1) et (7.2) en tant que couche intermédiaire (6), formant ainsi une vitre composite (7), et les vitres (7.1, 7.2) comprennent du verre ou du plastique.

13. Procédé selon l'une des revendications 10 à 12, **caractérisé en ce que** le matériau des feuilles thermoplastiques perforées (1) est choisi dans le groupe constitué par le polyvinylbutyral (PVB), l'éthylène-acétate de vinyle (EVA), le polyuréthane (PU) et/ou les copolymères et leurs mélanges.
